# EUROPEAN PATENT SPECIFICATION

(11) **EP 0 640 421 B1**
(45) Date of publication and mention of the grant of the patent: **20.11.1996**
(21) Application number: 94116312.3
(22) Date of filing: 08.10.1993
(51) Int. Cl.: B23B 29/034, B23Q 5/56

(54) **Improvements in or relating to micrometric devices for finishing high precision bores**
Verbesserungen in und an mikrometrische Vorrichtungen zum Präzisionsbohren
Améliorations dans ou en rélation avec des dispositifs micrométriques pour la finition de trous de précision

(30) Priority: 08.10.1992 BR 9204014
(43) Date of publication of application: 01.03.1995
(62) Divisional of application: 93308021.0
(73) Proprietor: INDUSTRIAS ROMI S.A., BR-13450-00 Santa Barbara d'Oeste - SP (BR)
(72) Inventor: Romi, Giordano, 13450-000 Santa Barbara d'Oeste - SP (BR)
(74) Representative: Needle, Jacqueline

(56) References cited:
- FR-A- 923 412
- FR-A- 1 389 630
- GB-A- 2 250 459
- PRATIQUE DES INDUSTRIES MECANIQUES, vol.48, no.6, June 1965, PARIS FR page 163 'Dispositif pour élimination automatique du jeu dans la commande pa vis et écrou'

## Description

The present invention relates to a micrometric device for finishing high precision bores.

GB-A-2250459 describes a micrometric device for finishing high precision bores comprising a substantially cylindrical, hollow body, a rotatable micrometric screw extending substantially longitudinally in said body, a tool supporting member supported by and movable with respect to said body, a tool holder carried by said tool supporting member, and moving means for causing linear movement of said tool supporting member upon rotation of said micrometric screw, and wherein backlash suppression means are provided to prevent backlash between first and second relatively movable parts of or associated with said moving means.

The present invention seeks to provide a micrometric device of the type defined but with distinctive backlash suppression means.

According to the present invention there is provided a micrometric device characterised in that said moving means for causing linear movement of said tool supporting member upon rotation of said micrometric screw comprises first and second concentric rods extending substantially perpendicularly to the longitudinal axis of said screw, the second rod extending within the first rod, and the first rod being coupled to said tool supporting member such that relative axial displacement of said first and second rods moves said tool supporting member substantially perpendicularly to the longitudinal axis of said screw, in that said backlash suppression means comprises a rotatable, substantially cylindrical bushing with both an internal and an external thread, the internal thread being engaged with said second, inner rod and the external thread being engaged with said first, outer rod, and in that said internal and external threads have different pitches.

Preferably, said moving means comprises threaded means engaging both said first and second concentric rods and arranged such that rotation of said threaded means causes substantially axial, linear movement of said first rod and thereby causes relative axial adjustment of said first and second rods, and wherein said threaded means comprises said substantially cylindrical bushing and is arranged on a terminal of said second rod.

In an embodiment, said moving means for causing linear movement of said tool supporting member upon rotation of said micrometric screw comprises a cylindrical rod coaxially arranged relative to said micrometric screw, and first and second concentric rods extending substantially perpendicularly to the longitudinal extent of said screw, and slidable means for coupling said cylindrical rod and said concentric rods such that longitudinal displacement of said cylindrical rod causes displacement of said concentric rods substantially perpendicularly to the longitudinal extent of said screw.

Preferably, said slidable means comprises rectilinear teeth on a planar surface of said cylindrical rod which are in engagement with teeth formed on respective planar surfaces of said concentric rods, and wherein said substantially cylindrical bushing is additionally arranged to suppress backlash between the teeth of the cylindrical rod and the teeth of the concentric rods.

A nut is preferably arranged to engage said third bushing to lock it in a set position.

In an embodiment, said moving means for causing linear movement of said tool supporting member upon rotation of said micrometric screw comprises a cylindrical rod coaxially arranged relative to said micrometric screw, and threaded means engaging both said micrometric screw and said cylindrical rod and arranged such that rotation of said screw causes substantially axial, linear movement of said cylindrical rod, and wherein further backlash suppression means are provided to prevent backlash between said screw and said cylindrical rod, said further backlash suppression means comprising a first substantially cylindrical bushing defined by said threaded means and arranged in the interior of said cylindrical rod.

Preferably, said threaded means comprises said first bushing and a second substantially cylindrical bushing, said first and second bushings being arranged substantially coaxially of said screw, each said bushing having an internal thread engagement with external threads of said screw, and wherein said first and second bushings are in alignment within said cylindrical rod, external threads of each of said bushings being in engagement with internal threads of said rod.

In a preferred embodiment, a nut is arranged to engage said first bushing to lock it in a set position relative to said micrometric screw.

Preferably, said cylindrical rod is supported by said body for slidable movement with respect thereto. Said first and second bushings are in threaded engagement with said cylindrical rod to provide a single assembly arranged substantially coaxially of an end of said screw. Furthermore, said cylindrical rod is engaged with first and second concentric rods to which said tool supporting member is linked.

The first bushing has the function of making void or suppressing backlash between the active flanks of the micrometric screw thread and the active flanks of the thread of the second bushing. This is achieved by the differential pitches of the internal and external threads of the first bushing. Other elements may be similarly arranged to produce a combined effect of backlash suppression and fine adjustment by use of threaded elements of different pitches.

In a preferred embodiment, said tool supporting member is a movable crossbeam supported on said body to move substantially perpendicularly to the longitudinal axis of said micrometric screw, and wherein movement of said crossbeam relative to said body is guided by at least two rows of spaced balls arranged to roll along respective facing tracks of said body and crossbeam.

In an embodiment, said tool holder is movable relative to said tool supporting member substantially perpendicularly to the longitudinal extent of said micrometric screw.

Preferably, said micrometric screw is supported for rotation within said body and axially and radially with respect thereto by way of support means comprising at least two sets of spaced balls and respective spacer rings which are anchored within said body by way of surrounding support rings.

In an embodiment, said support rings of said support means comprise at least a first ring having a chamfer on an internal edge defining a support for said balls radially and in one axial direction, and a second ring substantially coaxial relative to the first, and defining a support for said balls in the opposite axial direction.

Preferably, said body is formed of at least two substantially cylindrical parts which are secured together, to one of which parts said support means is secured, for example, by fastening screws.

In an embodiment, said cylindrical rod has a planar surface provided with rectilinear teeth with converging flanks, said rectilinear teeth being coupled to rectilinear teeth with converging flanks which are provided on a planar surface of said first and second concentric rods, and wherein said concentric rods extend substantially perpendicularly to the longitudinal axis of said screw, and wherein the rectilinear teeth of said cylindrical rod extend at an angle relative to the longitudinal axis of said rod.

In an embodiment, a plurality of teeth with interposed spaces are provided on a free end of said graduated drum, and at least one pair of locating pins carried by said body are arranged to engage said teeth and spaces, said pins being resiliently biassed against said teeth and spaces.

The purposeful existence of a gap between the position of pins and respective spaces on said graduated drum generates a duplicating number of stages of radial displacement of the graduated drum as the second pin is arranged at an angular distance a half pitch larger or smaller than an entire number of pitches so that before the first pin achieves a new location after 1/nth rotation, the set of spaces is located and actuated by the second pin.

Preferably, manual access to the drum is made by way of lateral openings on said body which permit manual rotation of the graduated drum.

In an embodiment, rotation of the drum is made through several non-manual external actuating means, said drum being adapted to receive movement from said external actuating means.

In an embodiment, clamping of the tool holder on the tool supporting member or movable crossbeam is made by the juxtaposition of dovetail portions on the upper surface of the crossbeam with corresponding and complementary portions on the lower portion of the tool holder. A safety device may be provided to protect the tool holder from loosening when subject to centrifugal forces. For example, said safety device may comprise a threaded stud which presses a safety pin, said pin being provided with an indented end which mates with teeth on the upper surface of the movable crossbeam. The crossbeam may also be provided with screws which besides enabling clamping of the tool holder by tightening against the movable crossbeam, also allow pre-positioning of said tool holder in accordance with the diameter of the bore to be finished.

Embodiments of the present invention will hereinafter be described, by way of example, with reference to the accompanying drawings, in which:
Figure 1 is an upper view of a micrometric device of the invention showing a tool holder arranged on its base;
Figure 2 is a longitudinal section of the micrometric device taken on line A-A of Figure 1;
Figure 2a shows an enlarged schematic detail of the micrometric device of Figure 2, illustrating mechanical elements for converting a rotating movement into a linear movement, and backlash suppression means;
Figure 3 is a longitudinal section of the micrometric device taken on line B-B of Figure 2;
Figure 4 is a cross section of the micrometric device taken on line D-D of Figure 3;
Figure 4a shows an enlarged schematic detail of Figure 4 and illustrates mechanical elements for converting axial motion into radial or cross motion, and backlash suppression means;
Figure 5 is a cross section of the micrometric device taken on line E-E of Figure 2 and showing fastening screws and two openings enabling access to a graduated drum;
Figure 6 is an enlarged and partially cut schematic longitudinal section of a free end of a graduated drum showing two locating pins;
Figure 6a is a front view of the circular face of the graduated drum showing a plurality of teeth uniformly arranged around the circular face and converging to its centre;
Figure 7 is a section of a tool holder to be used for machining bores larger than the body of the micrometric device; and
Figure 7a is a section of a tool holder to be used for machining bores smaller than the micrometric device body.

The drawings show a micrometric device for finishing high precision bores and illustrate several changes in the construction of a prior art micrometric device such as that described and claimed in United Kingdom published Patent Application No. 2250459.

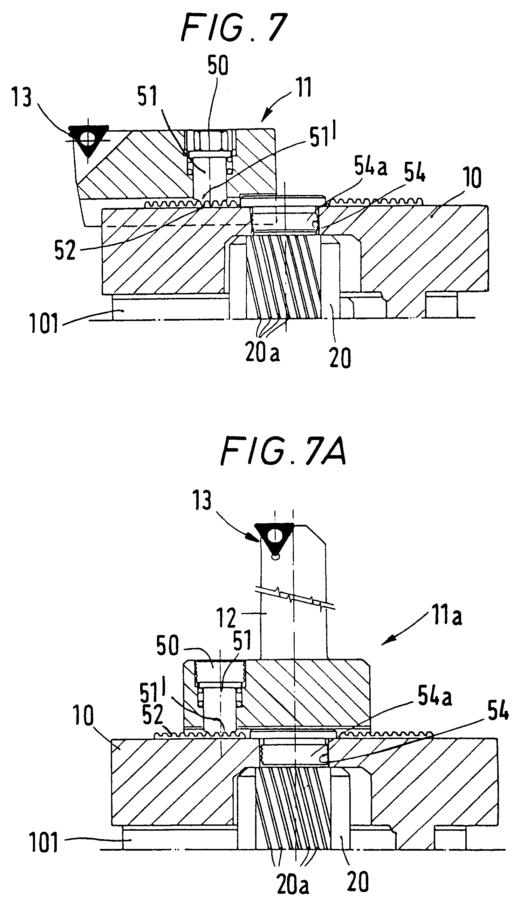

A micrometric device of the present invention is useful for finishing both through and blind bores. Moreover, the micrometric device of the invention is able to finish bores having a very small diameter, for example, as shown in Figure 7a.

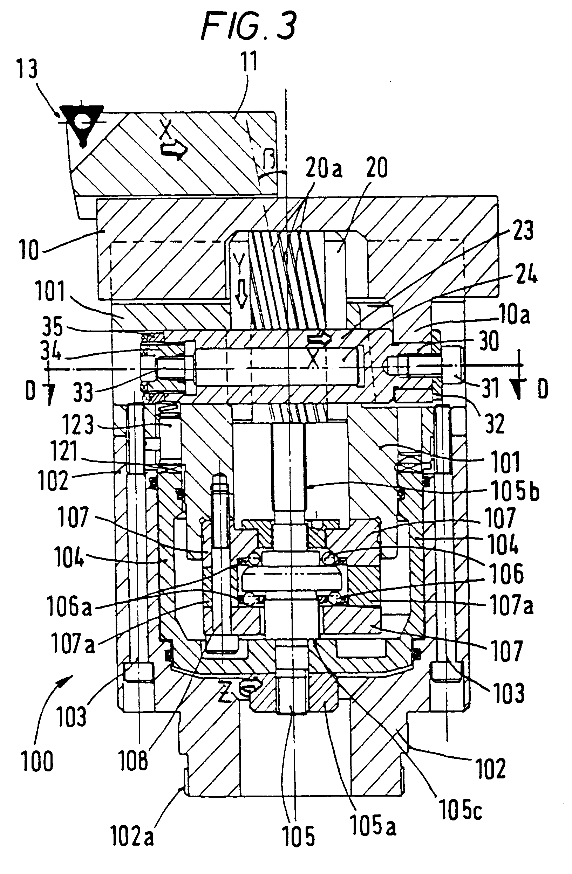

Figure 3 shows a tool 13 in a position of initial or starting displacement in the inward direction of the longitudinal axis of the micrometric device. The relative displacement of the component parts of the micrometric displacement are represented by X, Y and Z arrows.

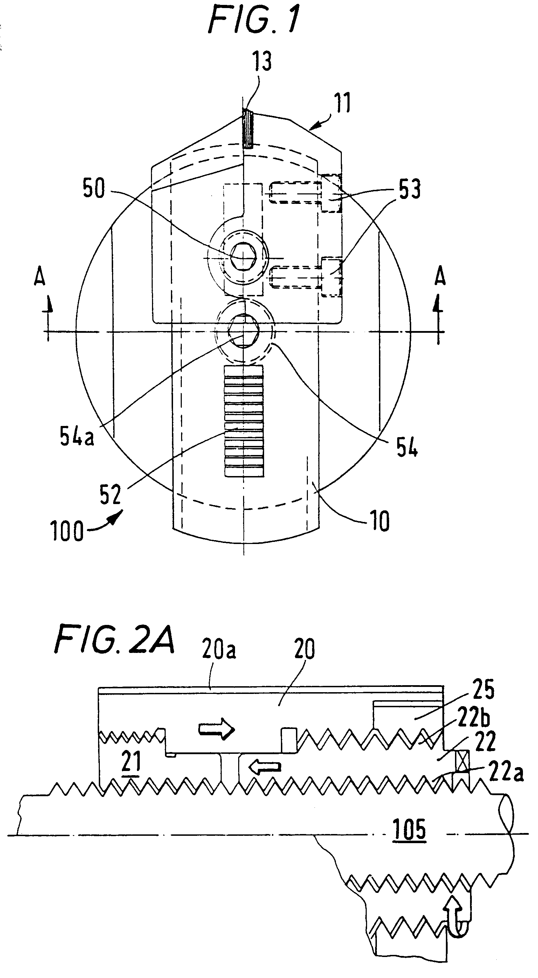

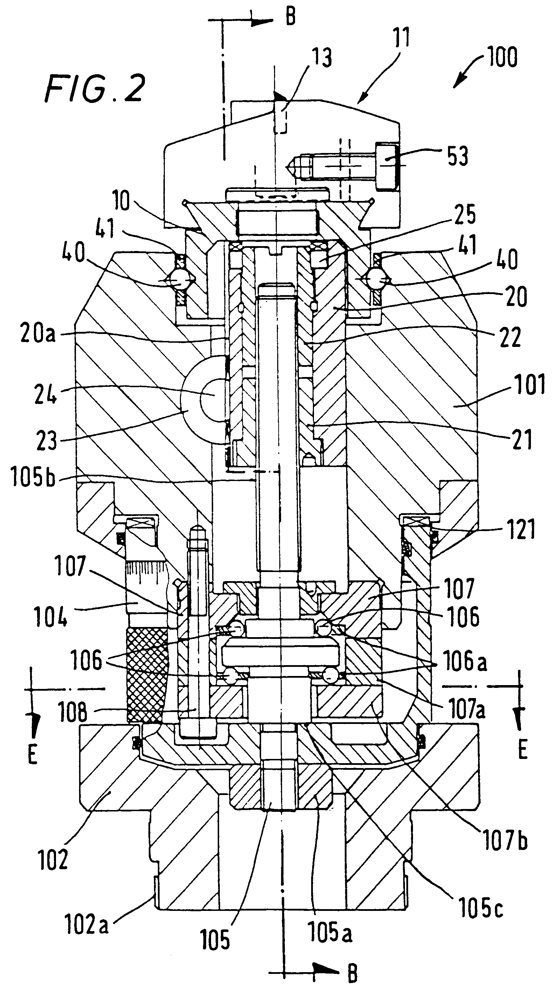

As shown in Figures 2, 7 and 7a, a micrometric device lOO has tool holders, or shanks, ll, lla which may be adjusted substantially perpendicularly to the longitudinal axis of the micrometric device lOO. Such adjustment enables a boring or cutting tool l3 clamped on tool holder ll or lla to be maintained on top of a movable crossbeam both for boring large bores, for example, as shown in Figure 7, or for boring bores as small as the smallest diameter of an extension rod l2, as shown in Figure 7a.

Micrometric device l00, as shown in Figures l, 2 and 3, is internally provided with a mechanism which is different from that provided on the micrometric devices described, for example, in GB-A-2250459. The mechanism described and illustrated herein provides a shorter and more compact construction of a micrometric device l00 as a whole, with a reduction in the overhang of the tool l3 and an increase in the rigidity of the tool 13. Thus, the effects of centrifugal force are minimized as much as possible when the micrometric device rotates at high operating speeds.

The illustrated micrometric device l00 is provided with a movement transmission mechanism comprising a graduated drum lO4 coaxially and jointly mounted on a micrometric screw l05. The mounting arrangement of the drum l04 and the screw l05 ensures that rotation of the drum l04 results in a rotation of the micrometric screw l05.

The micrometric screw l05 incorporates a collar and is axially maintained and radially supported in relation to the body of the micrometric device l00 by way of two series of balls lO6 and their spacer rings l06a. The spacer rings lO6a, with the series of balls lO6 arranged therein, are anchored inside the body of the micrometric device lOO by way of support rings lO7, 107a and lO7b. In the embodiment illustrated, an intermediate ring lO7a is arranged between an upper ring l07 and a lower ring lO7b. The upper ring lO7 is provided with a chamfer at its internal lower edge such that the chamfer, together with a rest of a right angle formed on an upper portion of the collar of micrometric device lO5, provides a radial and axial support for the balls lO6 lodged between the chamfer of ring 1O7 and the right angle rest of the collar. An upper surface of the lower ring lO7b provides together with a lower face of the collar of the micrometric screw lO5, a second axial support for the balls lO6 retained between the faces of the lower ring lO7b and the collar of the micrometric screw lO5. In this way, the upper and lower rings complete a support system for supporting the micrometric screw lO5 in relation to the body of the micrometric device lOO.

The support system, comprising the balls lO6, the spacer rings lO6a, and the rings lO7, lO7a and lO7b, is fixed by fastening screws lO8 to an upper body lOl which is shaped substantially as a cylindrical hollow body as shown in Figure 2. The upper body lOl is attached to a complementary lower cylindrical body lO2 by fastening screws lO3 as shown in Figure 3, so as to form a single body assembly coaxially mounted around, and housing, the micrometric screw lO5. The graduated drum lO4 is incorporated in, and coaxial with, the cylindrical hollow body lOl, lO2 formed thereby.

The micrometric device lOO is provided with external threads lO2a at a free edge of the lower cylindrical body lO2. The micrometric device lOO can be threaded to a machine tool mandrel (not shown) by means of these external threads lO2a.

The lower end of the micrometric screw lO5 is provided with a nut lO5a for holding the graduated drum lO4 in proximity to a shoulder lO5c of the micrometric screw 105. A thread lO5b is provided on an upper extension of the micrometric screw lO5 inside the upper cylindrical body lOl. Thread lO5b coaxially trespasses through, and engages with, a lower bushing 21 and an upper busing 22. The upper bushing 22 and lower bushing 21 are provided with internal and external threads which trespass coaxially through, and engage with, an indented cylindrical rod 20 slidably lodged in a coaxial hole of the upper cylindrical body lOl.

The indented cylindrical rod 20, together with the lower bushing 21 and the upper bushing 22, comprise one single assembly coaxially mounted around the upper portion or extension of the micrometric screw lO5. The assembly is arranged inside the interior of the upper cylindrical body lOl as shown in Figure 2. The construction of the indented rod 20 and bushings 21 and 22 enables the bushings to convert rotating movement of the graduated drum l04, which is transmitted to the micrometric screw l05, into linear movement of the cylindrical rod 20. In its turn, the linear movement of the rod 20 is arranged to displace a pair of concentric rods 23 and 24 shown in Figures 2 and 3. The rods 23, 24 are arranged substantially perpendicular to the longitudinal or geometric axis of the micrometric screw lO5.

The upper bushing 22 functions to suppress or substantially remove any backlash between active thread flanks of the micrometric screw lO5 and active thread flanks of the lower bushing 21. In this respect, the term "active flanks" indicates those flanks of a thread which interact with flanks of another thread. Thus, the bushing 22 enables a contact condition to be established without backlash between the flanks that interact between themselves. The backlash suppression function is performed in a controlled manner in that the upper bushing 22 is provided with an internal thread 22a and an external thread 22b which have different pitches, that is, the pitch of the external thread 22b of the upper bushing 22 differs from that of the internal thread 22a of the upper bushing 22. The internal thread 22a of the upper bushing engages with the micrometric screw lO5 and therefore the pitch of the internal thread 22a is equal to the pitch of the thread of the micrometric screw lO5. As a consequence, the relative displacement between the upper bushing 22 and the cylindrical rod 20 is equal to the difference between the pitches of internal thread 22a and external thread 22b of the upper bushing 22.

The backlash suppression system also comprises a nut 25 arranged around an upper extreme edge of the upper bushing 22. Nut 25 locks the upper bushing 22 in a set position to maintain a zero or null backlash condition between the active flanks of the thread of the upper bushing 22, the thread of the lower bushing 21 and the thread of the micrometric screw l05 as shown in Figure 2a.

As shown in Figures 2, 2a, 3, 4 and 4a, the cylindrical rod 20 incorporates a plane portion contained on an imaginary, dimensional plane substantially parallel to its geometric or longitudinal axis. The plane portion is provided with rectilinear teeth 20a which are oriented at an angle β relative to the geometric or longitudinal axis of the rod 20. The geometric axis of the rod 20 coincides with the geometric axis of the micrometric screw lO5. The rectilinear teeth 20a are formed by converging flanks which mate with teeth 23a and 24a arranged on the plane portion of each one of the concentric rods 23 and 24. The teeth 23a, 24a on rods 23, 24 are formed of converging flanks. The plane portion of each concentric rod is contained on the same imaginary plane and is arranged substantially parallel to the geometric axis of those rods. The plane portion of each rod 23, 24 coincides with the imaginary plane that contains the plane portion of the cylindrical rod 20.

The conversion of longitudinal displacement of the cylindrical rod 20 into perpendicular displacement of the concentric rods 23 and 24 is achieved through the slidable coupling of the indented parts, e.g., teeth 20a, 23a, and 24a.

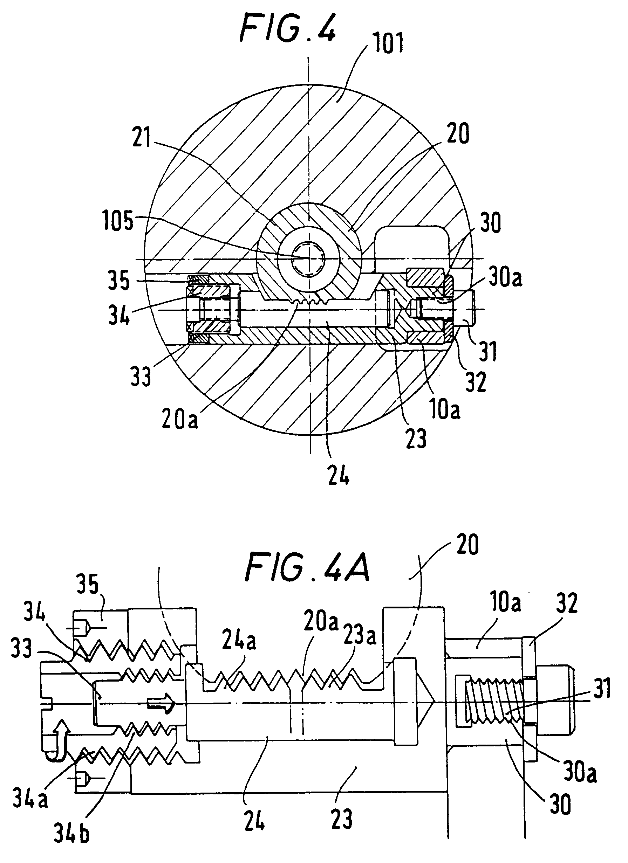

As shown in Figures 3, 4 and 4a, the rod 24 is arranged in the interior of rod 23. Rod 23 has a terminal 30 arranged at one side. Terminal 30 is provided with a thread 30a which interacts with a screw 31 lodged in the terminal 30. Screw 31 holds an ear, or projection, lOa of the crossbeam lO. Ear lOa is held between a portion of the terminal 30 and a washer 32 by the action of the screw 31.

On the opposite side of the pair of concentric rods 23 and 24, rod 24 has a terminal 33 which is provided with an external thread. A bushing 34 has an internal thread 34b which engages with the threading on terminal 33. Bushing 34 also has an external thread 34a which has a different pitch than that of the internal thread 34b. In this case, and in a similar manner to the action of the threads of different pitches of the upper bushing 22, the external thread 34a of the bushing 34 has a pitch different from the pitch of its internal thread 34b which is equal to the pitch of the thread of terminal 33. This arrangement has a double purpose, that is, to enable an ultra fine adjustment of the relative displacement to be made between the concentric rods 23 and 24, and also to enable the suppression of backlash between the teeth 20a of cylindrical rod 20 and the teeth 23a and 24a of the concentric rods 23 and 24, respectively. This is achieved by guaranteeing a metal to metal contact as described in GB-A-2250459.

The micrometric device illustrated further comprises a nut 35 arranged on the external thread 34a of the bushing 34. The nut 35 functions to maintain the preestablished conditions of zero backlash substantially constant by adjustment of the bushing 34. Figure 4a shows the locking action of nut 35 actuating simultaneously against bushing 34 and rod 23 to ensure the zero backlash condition between the active flanks of the assembly.

As shown in Figures 2 and 3, the movable crossbeam lO acts as a slidable support for tool shanks ll, lla and moves under the guidance of two rows of balls 40 which roll, with minimum friction and without play, on linear and parallel tracks, or guideways. These guideways are substantially V-shaped and are provided on the walls of a recess existing on the upper portion of upper body lOl and on the sides of the movable crossbeam l0. The recess extends from one side to the other in the upper portion of upper body lOl in a direction substantially perpendicular to the geometric axis of the micrometric screw lO5. In this manner, the movable crossbeam lO is also displaceable substantially perpendicularly to the geometric axis of the micrometric screw lO5. The displacement of the movable crossbeam lO is achieved in an extremely stable way (without rocking) because the movable crossbeam lO rests on three points. Two of the points are formed by the balls 40 lodged in the V-shaped guideways and the third point is comprised by the connection of the ear l0a of the movable crossbeam lO to the terminal 30 of the concentric rod 23.

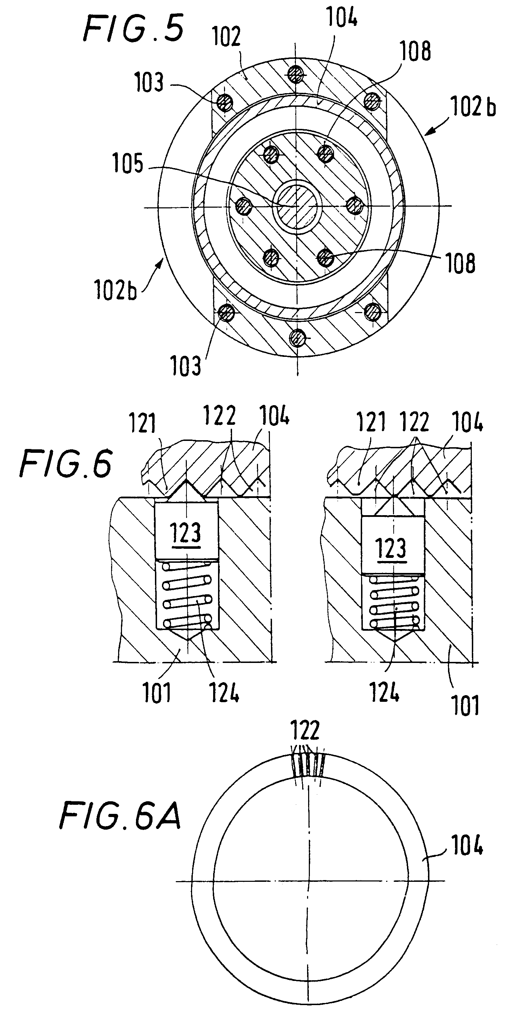

As shown in Figures 2, 6 and 6a, the free end of the graduated drum l04 is provided with a plurality of teeth l2l and spaces l22 arranged between the teeth l2l. At least one pair of locating pins l23 actuate on the teeth l2l. A free end of each locating pin l23 is preferably engaged in one space between any two teeth l2l and/or on the crest of any teeth. Thus, if one of the locating pins is engaged in a space between two teeth, the free end of the other locating pin will rest on a crest of another one of the teeth l2l. In order to prevent the locating pins l23 from interfering with one another, the locating pin which is resting on the crest of one of the teeth is not one of the two teeth which define the space therebetween in which the other locating pin is positioned.

Referring to Figures 2 and 6 and the description above, the action of springs l24 on the locating pins l23 is directed to establish a condition of resilient pressure such that the locating pins l23 actuate and perform their inherently effective function as locating pins for the graduated drum lO4. As such, the locating pins will provide adequate angular positioning for the drum lO4 and at the same time prevent an accidental adjustment change of the angular position previously made.

As can be seen in Figure 6, a gap is defined between the position of the locating pins l23 and the spaces l22 in such a manner so as to generate a duplicity of stages of radial displacement of the graduated drum lO4. Therefore, the second locating pin l23 is positioned at an angular distance of a half pitch larger or smaller than a complete quantity of pitches so that before the first pin l23 reaches a new position after rotation l/n, the set of spaces l22 is located and actuated by the second pin l23. The fraction l/n corresponds to one nth, where n is the number of spaces and defines the pitch which is equal to the interval between two consecutive spaces.

From the above, the result is obtained that each half pitch is equal to the faction 2/n, or two nth, which in turn corresponds to oneractionor division) of the graduated drum lO4.

The number of locating pins in the device of the present invention may be more than two pins 123. In one embodiment, for example, four locating pins l23 may be used wherein two of the locating pins l23 are positioned on the crest of any teeth l21 and between spaces l22 not occupied by the remaining two locating pins.

As shown in Figure 5, manual access to the graduated drum lO4 is through lateral openings lO2b provided in the lower body lO2 which permit normal rotation of the graduated drum lO4. The rotation of graduated drum lO4 can also be made by several external non-manual actuating means (not shown). In this embodiment, a drum lO4 is used which is capable of receiving movements from the external actuating means.

Tool shanks ll and lla are held on the crossbeam lO by juxtaposition of dovetail parts arranged on the upper surface of the crossbeam lO and on the lower surface of the tool shank ll and lla. Preferably, the parts on the crossbeam are male, whilst the parts on the tool shank are female and correspond to the male parts to ensure an adequate fit.

Figures l, 7, and 7a show a safety device to prevent the tool shank ll and lla from loosening up when subject to a centrifugal force. This is achieved by introducing a threaded stud 50 that presses against a safety pin 5l provided with a toothed terminal 5l' which engages on teeth 52 located on the upper surface of the crossbeam l0. The tool shank ll, lla is provided with screws 53 that hold the tool shank ll, lla in a secure position by tightening it against the crossbeam lO and allow also the pre-positioning of the tool shank ll, lla in accordance with the bore diameter to be finished by the micrometric device lOO.

The device also comprises a threaded hole 54 which is provided with a threaded plug 54a. The hole 54 provides access to a normal tool in the event an adjustment of the upper bushing 22 is required as the upper bushing 22 suppresses mechanical backlash as described and shown in Figure 2a.

It will be appreciated that modifications and alterations may be made to the embodiments as described above within the scope of the appended claims.

## Claims

1. A micrometric device (100) for finishing high precision bores comprising a substantially cylindrical, hollow body (101,102), a rotatable micrometric screw (105) extending substantially longitudinally in said body (101,102), a tool supporting member (10) supported by and movable with respect to said body (102,102), a tool holder (11,11a) carried by said tool supporting member (10), and moving means (20,23,24) for causing linear movement of said tool supporting member (10) upon rotation of said micrometric screw (105), and wherein backlash suppression means (34) are provided to prevent backlash between first and second relatively movable parts (20,23; 20,24) of or associated with said moving means (20,23,24), characterised in that said moving means (20,23,24) for causing linear movement of said tool supporting member (10) upon rotation of said micrometric screw (105) comprises first and second concentric rods (23,24) extending substantially perpendicularly to the longitudinal axis of said screw (105), the second rod (24) extending within the first rod (23), and the first rod being coupled to said tool supporting member (10) such that relative axial displacement of said first and second rods (23,24) moves said tool supporting member substantially perpendicularly to the longitudinal axis of said screw (105), in that said backlash suppression means (34) comprises a rotatable, substantially cylindrical bushing (34) with both an internal and an external thread (34a,34b), the internal thread (34b) being engaged with said second, inner rod (24) and the external thread (34a) being engaged with said first, outer rod (23), and in that said internal and external threads (34a, 34b) have different pitches.

2. A micrometric device as claimed in Claim 1, wherein said moving means comprises threaded means (34) engaging both said first and second concentric rods (23,24) and arranged such that rotation of said threaded means (34) causes substantially axial, linear movement of said first rod (23) and thereby causes relative axial adjustment of said first and second rods (23,24), and wherein said threaded means (34) comprises said substantially cylindrical bushing (34) and is arranged on a terminal (33) of said second rod (24).

3. A micrometric device as claimed in Claim 1 or Claim 2, wherein said moving means (20,23,24) for causing linear movement of said tool supporting member (10) upon rotation of said micrometric screw (105) comprises a cylindrical rod (20) coaxially arranged relative to said micrometric screw, and first and second concentric rods (23,24) extending substantially perpendicularly to the longitudinal extent of said screw (105), and slidable means (20a,23a,24a) for coupling said cylindrical rod (20) and said concentric rods (23,24) such that longitudinal displacement of said cylindrical rod (20) causes displacement of said concentric rods (23,24) substantially perpendicularly to the longitudinal extent of said screw (105).

4. A micrometric device as claimed in Claim 3, wherein said slidable means (20a,23a,24a) comprises rectilinear teeth (20a) on a planar surface of said cylindrical rod (20) which are in engagement with teeth (23a, 24a) formed on respective planar surfaces of said concentric rods (23,24), and wherein said substantially cylindrical bushing (34) is additionally arranged to suppress backlash between the teeth (20a) of the cylindrical rod (20) and the teeth (23a,24a) of the concentric rods (23,24).

5. A micrometric device as claimed in any preceding claim, wherein a nut (35) is arranged to engage said substantially cylindrical bushing (34) to lock it in a set position.

6. A micrometric device as claimed in any preceding claim, wherein said moving means (20,23,24) for causing linear movement of said tool supporting member (10) upon rotation of said micrometric screw (105) comprises a cylindrical rod (20) coaxially arranged relative to said micrometric screw, and threaded means (21,22) engaging both said micrometric screw (105) and said cylindrical rod (20) and arranged such that rotation of said screw (105) causes substantially axial, linear movement of said cylindrical rod (20), and wherein further backlash suppression means (22) are provided to prevent backlash between said screw (105) and said cylindrical rod (20), said further backlash suppression means (22) comprising a first substantially cylindrical bushing (22) defined by said threaded means (21,22) and arranged in the interior of said cylindrical rod (20).

7. A micrometric device as claimed in Claim 6, wherein said threaded means (21,22) comprises said first bushing (22) and a second substantially cylindrical bushing (21) said first and second bushings (21,22) being arranged substantially coaxially of said screw (105), each said bushing (21,22) having an internal thread in engagement with external threads of said screw (105), and wherein said first and second bushings are in alignment within said cylindrical rod (20), external threads of each of said bushings (21,22) being in engagement with internal threads of said rod (20).

8. A micrometric device as claimed in Claim 7, wherein a nut (25) is arranged to engage said first bushing (22) to lock it in a set position relative to said micrometric screw (105).

9. A micrometric device as claimed in any preceding claim, wherein said tool supporting member is a movable crossbeam (10) supported on said body (101,102) to move substantially perpendicularly to the longitudinal axis of said micrometric screw (105), and wherein movement of said crossbeam (10) relative to said body is guided by at least two rows of spaced balls (40) arranged to roll along respective facing tracks of said body (101,102) and crossbeam (10).

## Patentansprüche

1. Mikrometereinrichtung (100) zur Nachbearbeitung von sehr genauen Bohrungen, mit einem im wesentlichen zylindrischen, hohlen Körper (101, 102), einer drehbaren Mikrometerschraube (105), die sich im wesentlichen in Längsrichtung in dem Körper (101, 102) erstreckt, einem vom Körper (101, 102) gehaltenen und bezüglich diesem bewegbaren Werkzeughalteelement (10), einer vom Werkzeughalteelement (10) getragenen Werkzeugaufnahme (11, 11a) und Bewegungsmitteln (20, 23, 24) zur linearen Bewegung des Werkzeughalteelementes (10) bei Drehung der Mikrometerschraube (105), wobei Spielunterdrückungsmittel (34) vorgesehen sind, um Spiel zwischen den Bewegungsmitteln (20, 23, 24) zugehörigen oder ihnen zugeordneten ersten und zweiten, relativ zueinander bewegbaren Teilen (20, 23; 20, 24) zu verhindern, **dadurch gekennzeichnet,** daß die Bewegungsmittel (20, 23, 24) zur linearen Bewegung des Werkzeughalteelements (10) bei Drehung der Mikrometerschraube (105) erste und zweite konzentrische Stangen (23, 24) aufweisen, die sich im wesentlichen senkrecht zur Längsachse der Mikrometerschraube (105) erstrecken, wobei die zweite Stange (24) sich innerhalb der ersten Stange (23) erstreckt und die erste Stange mit dem Werkzeughalteelement (10) gekoppelt ist, so daß eine relative axiale Verlagerung der ersten und zweiten Stangen (23, 24) das Werkzeughalteelement im wesentlichen senkrecht zur Längsachse der Mikrometerschraube (105) verlagert, daß die Spielunterdrückungsmittel (34) eine im wesentlichen zylindrische Buchse (34) mit sowohl einem Innen- als auch einem Außengewinde (34a, 34b) aufweisen, wobei das Innengewinde (34b) mit der zweiten, inneren Stange (24) und das Außengewinde (34a) mit der ersten, äußeren Stange (23) in Eingriff steht, und daß Innen- und Außengewinde (34a, 34b) unterschiedliche Steigungen haben.

2. Mikrometereinrichtung nach Anspruch 1, bei der die Bewegungsmittel Gewindemittel (34) aufweisen, die in Eingriff sowohl mit der ersten als auch mit der zweiten konzentrischen Stange (23, 24) stehen und derart angeordnet sind, daß ihre Drehung eine im wesentlichen axiale, lineare Bewegung der ersten Stange (23) und dadurch eine relative axiale Einstellung der ersten und zweiten Stangen (23, 24) verursacht, wobei die Gewindemittel (34) die im wesentlichen zylindrische Buchse (34) enthalten und auf einem Ende (33) der zweiten Stange (24) angeordnet sind.

3. Mikrometereinrichtung nach Anspruch 1 oder 2, bei der die Bewegungsmittel (20, 23, 24) zur linearen Bewegung des Werkzeughaltemittels (10) bei Drehung der Mikrometerschraube (105) eine koaxial bezüglich der Mikrometerschraube angeordnete, zylindrische Stange (20) und erste und zweite konzentrische Stangen (23, 24), die sich im wesentlichen senkrecht zur Längserstreckung der Mikrometerschraube (105) erstrecken und verschiebbare Mittel (20a, 23a, 24a,) zum Koppeln von zylindrischer Stange (20) und konzentrischen Stangen (23, 24) aufweisen, so daß eine Verlagerung der zylindrischen Stange (20) in Längsrichtung eine Verlagerung der konzentrischen Stangen (23, 24) im wesentlichen senkrecht zur Längserstreckung der Mikrometerschraube (105) bewirkt.

4. Mikrometereinrichtung nach Anspruch 3, bei der die verschiebbaren Mittel (20a, 23a, 24a) auf einer ebenen Fläche der zylindrischen Stange (20) geradlinige Zähne (20a) aufweisen, die in Eingriff mit Zähnen stehen (23a, 24a), die auf entsprechenden ebenen Flächen der konzentrischen Stangen (23, 24) ausgebildet sind, und bei der die im wesentlichen zylindrische Buchse (34) außerdem angeordnet ist, um Spiel zwischen den Zähnen (20a) der zylindrischen Stange (20) und den Zähnen (23a, 24a) der konzentrischen Stangen (23, 24) zu unterdrücken.

5. Mikrometereinrichtung nach einem der vorhergehenden Ansprüche, bei der eine Mutter (35) zum Eingriff mit der im wesentlichen zylindrischen Buchse (34) angeordnet ist, um diese in einer eingestellten Lage zu verriegeln.

6. Mikrometereinrichtung nach einem der vorhergehenden Ansprüche, bei der die Bewegungsmittel (20, 23, 24) zur linearen Bewegung des Werkzeughalteelementes (10) bei Drehung der Mikrometerschraube (105) eine koaxial bezüglich der Mikrometerschraube angeordnete, zylindrische Stange (20) und Gewindemittel (21, 22) aufweisen, die in Eingriff mit sowohl der Mikrometerschraube (105) als auch der zylindrischen Stange (20) stehen und derart angeordnet sind, daß eine Drehung der Mikrometerschraube (105) eine im wesentlichen axiale, lineare Bewegung der zylindrischen Stange (20) bewirkt, und bei der weitere Spielunterdrückungsmittel (20) vorgesehen sind, um Spiel zwischen der Mikrometerschraube (105) und der zylindrischen Stange (20) zu verhindern, wobei die weiteren Spielunterdrückungsmittel (22) eine von den Gewindemitteln (21, 22) gebildete erste, im wesentlichen zylindrische Buchse (22) aufweisen und im Inneren der zylindrischen Stange (20) angeordnet sind.

7. Mikrometereinrichtung nach Anspruch 6, bei der die Gewindemittel (21, 22) die erste Buchse (22) und eine zweite im wesentlichen zylindrische Buchse (21) aufweisen, die im wesentlichen koaxial zur Mikrometerschraube (105) angeordnet sind, wobei jede Buchse (21, 22) ein in Eingriff mit Außengewinden der Mikrometerschraube (105) stehendes Innengewinde hat, und bei der die ersten und zweiten Buchsen innerhalb der zylindrischen Stange (20) zueinander ausgerichtet sind, wobei Außengewinde jeder der Buchsen (21, 22) in Eingriff mit Innengewinden der Stange (20) stehen.

8. Mikrometereinrichtung nach Anspruch 7, bei der eine Mutter (25) in Eingriff mit der ersten Buchse (22) steht, um diese in einer Einstellage bezüglich der Mikrometerschraube (105) zu verriegeln.

9. Mikrometereinrichtung nach einem der vorhergehenden Ansprüche, bei der das Werkzeughalteelement ein bewegbarer Querträger (10) ist, der zur Bewegung im wesentlichen senkrecht zur Längsachse der Mikrometerschraube (105) am Körper (101, 102) gehalten ist, und bei der die Bewegung des Querträgers (10) bezüglich dem Körper von mindestens zwei Reihen im Abstand angeordneter Kugeln (40) geführt ist, die entlang entsprechender, einander zugewandter Bahnen von Körper (101, 102) und Querträger (10) rollbar angeordnet sind.

## Revendications

1. Dispositif micrométrique (100) pour l'usinage de finition d'alésages de haute précision, comprenant un corps creux (101, 102) sensiblement cylindrique, une vis micrométrique (105) pouvant être entraînée en rotation et s'étendant sensiblement en direction longitudinale dans ledit corps (101, 102), un élément support d'outil (10) supporté par ledit corps (101, 102) et déplaçable par rapport à celui-ci, un porte-outil (11, 11a) porté par ledit élément support d'outil (10), et des moyens de déplacement (20, 23, 24) destinés à provoquer un déplacement linéaire dudit élément support d'outil (10) lors d'une rotation de ladite vis micrométrique (105), et dans lequel des moyens de suppression de jeu (34) sont prévus pour empêcher qu'un jeu s'établisse entre des première et deuxième pièces (20, 23; 20, 24) déplaçables l'une par rapport à l'autre, faisant partie desdits moyens de déplacement (20, 23, 24) ou associées à ces derniers, caractérisé en ce que lesdits moyens de déplacement (20, 23, 24), destinés à provoquer un déplacement linéaire dudit élément support d'outil (10) lors d'une rotation de ladite vis micrométrique (105), comprennent des première et deuxième tiges concentriques (23, 24) qui s'étendent dans une direction sensiblement perpendiculaire à l'axe longitudinal de ladite vis (105), la deuxième tige (24) s'étendant à l'intérieur de la première tige (23), et la première tige étant accouplée audit élément support d'outil (10) de telle sorte qu'une translation axiale relative desdites première et deuxième tiges (23, 24) déplace ledit élément support d'outil dans une direction sensiblement perpendiculaire à l'axe longitudinal de ladite vis (105), en ce que lesdits moyens de suppression de jeu (34) comprennent une douille sensiblement cylindrique (34) apte à être entraînée en rotation et ayant à la fois un filetage interne et un filetage externe (34a, 34b), le filetage interne (34b) étant en prise avec ladite deuxième tige (24) intérieure et le filetage externe (34a) étant en prise avec ladite première tige (23) extérieure, et en ce que lesdits filetages interne et externe (34a, 34b) ont des pas différents.

2. Dispositif micrométrique tel que défini dans la revendication 1, dans lequel lesdits moyens de déplacement comprennent des moyens filetés (34) qui viennent en prise avec à la fois ladite première et ladite deuxième tiges concentriques (23, 24) et qui sont conçus de telle sorte qu'une rotation desdits moyens filetés (34) provoque un déplacement linéaire, sensiblement axial, de ladite première tige (23) et conduise ainsi à un réglage en direction axiale des positions relatives desdites première et deuxième tiges (23, 24), et dans lequel lesdits moyens filetés (34) comprennent ladite douille sensiblement cylindrique (34) et sont disposés sur un embout de raccordement (33) de ladite deuxième tige (24).

3. Dispositif micrométrique tel que défini dans la revendication 1 ou la revendication 2, dans lequel lesdits moyens de déplacement (20, 23, 24), destinés à provoquer un déplacement linéaire dudit élément support d'outil (10) lors d'une rotation de ladite vis micrométrique (105), comprennent une tige cylindrique (20) positionnée coaxialement par rapport à ladite vis micrométrique, et les première et deuxième tiges concentriques (23, 24) qui s'étendent dans une direction sensiblement perpendiculaire à la dimension longitudinale de ladite vis (105), ainsi que des moyens coulissants (20a, 23a, 24a) destinés à accoupler ladite tige cylindrique (20) et lesdites tiges concentriques (23, 24) d'une façon telle qu'une translation longitudinale de ladite tige cylindrique (20) provoque une translation desdites tiges concentriques (23, 24) dans une direction sensiblement perpendiculaire à la dimension longitudinale de ladite vis (105).

4. Dispositif micrométrique tel que défini dans la revendication 3, dans lequel lesdits moyens coulissants (20a, 23a, 24a) comprennent des dents rectilignes (20a) sur une surface plane de ladite tige cylindrique (20), qui sont en prise avec des dents (23a, 24a) formées sur des surfaces planes respectives desdites tiges concentriques (23, 24), et dans lequel ladite douille sensiblement cylindrique (34) est en outre conçue pour supprimer tout jeu entre les dents (20a) de la tige cylindrique (20) et les dents (23a, 24a) des tiges concentriques (23, 24).

5. Dispositif micrométrique tel que défini dans l'une quelconque des revendications précédentes, dans lequel un écrou (35) est monté de façon à venir en prise avec ladite douille sensiblement cylindrique (34), pour la bloquer dans une position fixée.

6. Dispositif micrométrique tel que défini dans l'une quelconque des revendications précédentes, dans lequel lesdits moyens de déplacement (20, 23, 24), destinés à provoquer un déplacement linéaire dudit élément support d'outil (10) lors d'une rotation de ladite vis micrométrique (105), comprennent une tige cylindrique (20) positionnée coaxialement par rapport à ladite vis micrométrique, et des moyens filetés (21, 22) qui viennent en prise avec à la fois ladite vis micrométrique (105) et ladite tige cylindrique (20) et qui sont conçus d'une façon telle qu'une rotation de ladite vis (105) induise un déplacement linéaire, sensiblement axial, de ladite tige cylindrique (20), et dans lequel des moyens supplémentaires de suppression de jeu (22) sont prévus pour empêcher qu'un jeu s'établisse entre ladite vis (105) et ladite tige cylindrique (20), lesdits moyens supplémentaires de suppression de jeu (22) comprenant une première douille sensiblement cylindrique (22) définie par lesdits moyens filetés (21, 22) et disposée à l'intérieur de ladite tige cylindrique (20).

7. Dispositif micrométrique tel que défini dans la revendication 6, dans lequel lesdits moyens filetés (21, 22) comprennent ladite première douille (22) et une deuxième douille (21) sensiblement cylindrique, lesdites première et deuxième douilles (21, 22) étant positionnées sensiblement coaxialement à ladite vis (105), chacune desdites douilles (21, 22) présentant un filetage interne en prise avec des filetages externes de ladite vis (105), et dans lequel lesdites première et deuxième douilles sont en alignement mutuel à l'intérieur de ladite tige cylindrique (20), des filetages externes de chacune desdites douilles (21, 22) étant en prise avec des filetages internes de ladite tige (20).

8. Dispositif micrométrique tel que défini dans la revendication 7, dans lequel un écrou (25) est monté de façon à venir en prise avec ladite première douille (22), pour la bloquer dans une position fixée par rapport à ladite vis micrométrique (105).

9. Dispositif micrométrique tel que défini dans l'une quelconque des revendications précédentes, dans lequel ledit élément support d'outil est une traverse mobile (10) supportée par ledit corps (101, 102) de façon à se déplacer dans une direction sensiblement perpendiculaire à l'axe longitudinal de ladite vis micrométrique (105), et dans lequel le déplacement de ladite traverse (10) par rapport audit corps est guidé par au moins deux rangs de billes espacées (40) positionnées de façon à rouler le long de pistes respectives en vis-à-vis dudit corps (101, 102) et de ladite traverse (10).
